(19) Europäisches Patentamt
European Patent Office
Office européen des brevets

(11) **EP 2 009 459 B1**

(12) **EUROPÄISCHE PATENTSCHRIFT**

(45) Veröffentlichungstag und Bekanntmachung des Hinweises auf die Patenterteilung:
**12.05.2010   Patentblatt 2010/19**

(51) Int Cl.:
***G01S 3/801*** *(2006.01)*

(21) Anmeldenummer: **07012469.8**

(22) Anmeldetag: **26.06.2007**

(54) **Verfahren zur verbesserten DEMON-Berechnung mittels Teilband-Signalen und lokalen Bereichen**

Method for improved DEMON analysis using sub-band signals and local areas

Procédé destiné à l'analyse DEMON amélioré à l'aide de signaux à bande partielle et de zones locales

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**31.12.2008   Patentblatt 2009/01**

(73) Patentinhaber: **Christian-Albrechts-Universität zu Kiel**
**24118 Kiel (DE)**

(72) Erfinder: **Ludwig, Thorsten, Dr.**
**24229 Dänischenhagen (DE)**

(74) Vertreter: **Biehl, Christian**
**Boehmert & Boehmert**
**Anwaltssozietät**
**Niemannsweg 133**
**24105 Kiel (DE)**

(56) Entgegenhaltungen:
**DE-A1- 4 220 429**

- SEIXAS J M ET AL: "Wavelet transform as a preprocessing method for neural classification of passive sonar signals" ELECTRONICS, CIRCUITS AND SYSTEMS, 2001. ICECS 2001. THE 8TH IEEE INTE RNATIONAL CONFERENCE ON 2-5 SEPTEMBER 2001, PISCATAWAY, NJ, USA, IEEE, Bd. 1, 2. September 2001 (2001-09-02), Seiten 83-86, XP010562941 ISBN: 978-0-7803-7057-9
- STEVENS J D ED - MATTHEWS M B (ED): "Detection of short transients in colored noise by multirate multiresolution (MRMR) analysis" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003; [ASILOMAR CONFERENCE ON SIGNALS, SYSTEMS AND COMPUTERS], NEW YORK, NY : IEEE, US, Bd. 1, 9. November 2003 (2003-11-09), Seiten 1183-1187, XP010703071 ISBN: 978-0-7803-8104-9

**Beschreibung**

Die Erfindung betrifft ein Verfahren zur verbesserten DEMON-Berechnung mittels Teilband-Signalen und lokalen Bereichen zur Auswertung von Unterwasserschallsignalen und zur verbesserten Erstellung von Unterwasserlagebildem durch Passiv-Sonaranlagen.

Es ist bekannt, dass Passiv-Sonare mit Hilfe hochempfindlicher Empfangsantennen Geräuschquellen detektieren und verfolgen, um ein Unterwasserlagebild zu erstellen. Hierfür ist ein Klassifikationsschritt erforderlich, der darauf aufbaut, dass alle Geräuschquellen im Wasser eine akustische Signatur hinterlassen. Bei den meisten Wasserfahrzeugen, wie z. B. Schiffen, ist die Hauptgeräuschquelle die Antriebsanlage bestehend aus der Maschine, der Antriebswellen, der/den Schraube(n) und den Getriebezahnrädern. Daneben existieren viele Hilfsaggregate, wie z.B. Pumpen, Lüfter, Generatoren und Klimaanlagen, die ebenfalls als Geräuschquellen die akustische Signatur beeinflussen (siehe DE 41 41 562 A1).

Ebenfalls bekannt ist, dass bei der Passiv-Zielklassifizierung die Intensität der vom Ziel abgestrahlten Energie mit Hilfe verschiedener Verfahren in der Zeit-Frequenz-Ebene bestimmt wird (DD 301 729 A9, DD 300 369A5).

Schließlich ist aus Sevens J D (Ed.) - Matthews M B (Ed.) "Detection of short transients in colored noise by multirate multiresolution (MRMR) analysis" CON ' FERENCE RECORS of the 37th Asilomar Conference on Signals, Systems % Computers, Pacific Grove, Nov. 9-13, 2003 Bd. 1, 9.11.2003 IEEE, US, S. 1183-1187 eine Zerlegung in Teilbandsignale zur Detektion von Signalen, z.B. bei einem Passiv-Sonar bekannt.

Eines dieser Verfahren ist die DEMON-Analyse (DEMON = Demodulation of Envelope Modulation on Noise). Sie dient zur Detektion und Auswertung von Kavitationsgeräuschen. Ab einer bestimmten Propellerblattgeschwindigkeit wird der an den Propellerflügeln einer Schiffsschraube entstehende Unterdruck so groß, dass Gasbläschen entstehen, deren Implosionen kurze akustische Pulse mit großer Intensität erzeugen - der sog. Kavitation. Da die Kavitation mit zunehmender Wassertiefe abnimmt, erzeugen die kavitierenden Propellerflügel durch ihre Drehung im Wasser ein amplituderunoduliertes Breitbandgeräusch. Die Information des Wasserschallsignals befindet sich in der Hüllkurve des modulierten Signals, das durch durch ihre Drehung im Wasser ein amplitudenmoduliertes Breitbandgeräusch. Die Information des Wasserschallsignals befindet sich in der Hüllkurve des modulierten Signals, das durch die DEMON-Analyse sichtbar gemacht wird. Die Hüllkurvendemodulation wird dabei auf den informationstragenden Frequenzbereich beschränkt, um störende Rauschanteile bereits vor der Demodulation aus dem Signal zu entfernen.

Im DEMON-Gramm erscheint die gesuchte Information in Form von Frequenzlinien, die ein harmonisches Muster bilden, die durch Auswertung der Linien im Idealfall Informationen über die Wellendrehzahl, die Anzahl der Propellerflügel und die Art des Antriebs (z. B. Ein-Wellenbetrieb/Mehr-Wellenbetrieb) enthalten und zu Klassifikationszwecken nutzbar sind.

In der DE 42 20 429 A1 ist zum Beispiel eine Nachverarbeitung eines Demon-Gramms durch eine Fuzzy-Logik beschrieben.

Zur Erstellung eines DEMON-Gramm ist für die DEMON-Analyse die richtige Auswahl eines geeigneten Frequenzbereiches für den Hüllkurvendemodulator eines der schwierigsten Probleme, welches sich erhöht, wenn das Signal to Noise Ratio (S/N-ratio) durch Überlagerung nicht frequenzrelevanter Rauschanteile verschlechtert wird.

Eine Lösung, die zum Stand der Technik gehört, ist bei Vaidyanathan, P. P. in Multirate Systems and Filter Banks, Prentice Hall, Englewood Cliffs, 1993 und bei Proakis J.G., Manolakis, D.G. in Digital Signal Processing, Prentice Hall, New Jersey, 1996 beschrieben. Üblich ist die spektrale Zerlegung des Signals in einer Baumfilterbank (QMF-Bank), die aus Tief- und Hochpassfiltern aufgebaut ist. Grundsätzlich ist jede Filterbankstruktur, die das zu untersuchende Signal in Teilbänder zerlegt, geeignet, um eine DEMON-Analyse vorzunehmen. Die vorhandenen Analysemethoden weisen folgende Nachteile auf:

- es existiert keine a priori Information, in welchem bevorzugten Frequenzbereich die Amplitudenmodulation stattfindet, die durch die Kavitation und andere Umgebungsgeräusche erzeugt wird. Die Auswahl eines Bandpassfilters für den Hüllkurvendemodulator bei der DEMON-Analyse erfolgt empirisch,

- der zu analysierende Frequenzbereich kann nur sukzessiv durch Spezifikation eines Bandpassfilters nach unterer und oberer Grenzfrequenz festgelegt werden,

- der Frequenzbereich, in dem die durch Kavitation bedingte Amplitudenmodulation auftritt, ist zeitvariant. Es gibt kein Verfahren, dass den gewählten Frequenzbereich mit dem Demodulationsergebnis optimiert und das Bandpassfilter nachregelt. In Situationen mit vielen Zielkontakten wird die Auswertung daher sehr zeitaufwändig,

- bei zwei oder mehr Zielkontakten in gleicher Peilung werden die Informationen über schwächere Ziele im DEMON-Gramm häufig nicht sichtbar. Sie werden dann durch die lauteste Geräuschquelle maskiert, selbst wenn die Modulation in unterschiedlichen Frequenzbereichen stattfindet [Schulungsmaterial zur Sonaranlage DBQS-40, Firma Atlas Elektronik, Abschnitt Zielgeräusch-Analyse; Urban, H. G.: Handbuch der Wasserschalltechnik, STN Atlas Elektronik GmbH, Bremen, (2002), Seite 255-256; Waite, A. D.: Sonar for Practising Engineers, Wiley & Sons, (2002), Seite 129-131].

Eine weitere Auswertung wird in dem Artikel Seixas J M et al. "Wavelet transform as a preprocessing method for neural classification of passive sonar signals" ELECTRONICSm CIRCUITS ans SYSTEMS 2001, ICECS 2001, PISCATANWAY, NJ, USA, IEEE, Bd. 1, 2.9.2001, S. 83-86 beschrieben.

Aufgabe der Erfindung ist es, ein Verfahren bereitzustellen, mit dem die Nachteile der bekannten Auswerteverfahren bei der Erstellung eines DEMON-Gramm vermieden werden und mit dem eine optimale Eignung des Frequenzbereiches für die DEMON-Analyse laufend kontrolliert wird, die Analyseergebnisse unterschiedlicher Frequenzbereiche geeignet kombiniert, um mehrere Ziele in einer Peilung im DEMON-Gramm auflösen zu können und um das S/N-ratio durch Überlagerung korrelierter Signalanteile bei gleichzeitiger Überlagerung unkorrelierten Rauschanteilen zu verbessern.

Diese Aufgabe wird mit dem Verfahren nach den Merkmalen des Patentanspruchs 1 gelöst. Vorteilhafte Ausgestaltungen der Erfindung ergeben sich aus den abhängigen Ansprüchen.

Die Erfindung wird im Folgenden unter Bezug auf die beigefügten Zeichnungen erläutert. Dabei zeigen:

Fig. 1    eine Baumfilterbank, bestehend aus Hoch- und Tiefpässen,

Fig. 2    ein Signalflussplan zur DEMON-Gramm-Berechnung,

Fig. 3    ein Aufteilungsschema der Zeit-Frequenz-Ebene in lokale Bereiche.

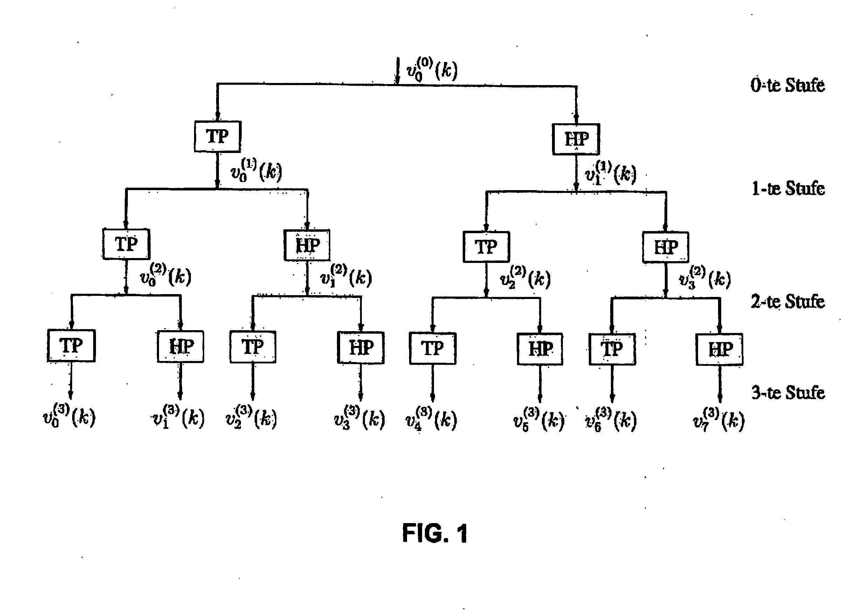

Zur Auswahl geeigneter Frequenzbereiche für die DEMON-Berechnung wird die bekannte DEMON-Analyse um ein Verfahren ergänzt, das die zu untersuchenden Signale für viele und sich auch überlappende Frequenzbereiche analysiert. Es werden adaptiv geeignete Frequenzbereiche bestimmt und die gewichteten Analyseergebnisse werden zu einer Darstellung kombiniert. Die einzelnen Schritte des Verfahrens werden im Folgenden aus Gründen der Übersichtlichkeit in Blöcken beschrieben; die eigentliche Verarbeitung erfolgt kontinuierlich über die Zeit. Das vorverarbeitete Eingangssignal $v_0^{(0)}(k)$ (Wandlung des nichtelektrischen Schalldrucksignals mittels Sensor/Sensorelement in ein verstärkbares, elektrisches, bandbegrenztes Signal) wird durch die in Figur 1 dargestellte Baumfilterbank sukzessive in Hoch- und Tiefpassanteile zerlegt. Die Anzahl der Teilbandsignale in der Filterbank verdoppelt sich dabei von Stufe zu Stufe. Durch die Filterung wird die Bandbreite der Teilbandsignale halbiert und ermöglicht in jeder Stufe eine Taktreduzierung um den Faktor zwei, die in der Figur 1 aus Gründen der Übersichtlichkeit nicht dargestellt ist. Tief- und Hochpassfilter sind so konzipiert, dass die durch die Taktreduzierung entstehenden unvermeidlichen Verzerrungen in den Teilbandsignalen klein bleiben. Bei den Teilbandsignalen $v_0^{(0)}(k)$, $v_0^{(1)}(k)$, $v_1^{(1)}(k)$, $v_0^{(2)}(k)$,... gibt der hoch gestellte Index die Stufe in der Filterbank, der tief gestellte Index die Nummer des Teilbandes in der jeweiligen Stufe an. Die Anzahl der Stufen wird entsprechend der von den Teilbandsignalen der höchsten Stufe minimal zu belegenden Bandbreite gewählt. Die Taktrate für den Zeitindex k halbiert sich bei Taktreduzierung in den Teilbändem von Stufe zu Stufe. L gibt die Anzahl der Stufen mit dem Laufindex $l=0,1,...,L-1$ und $N_1$ die Anzahl der Teilbänder in Stufe 1 mit dem Laufindex $n=0,...,N_1-1$ an. Die Zerlegung des Signals durch die Filterbank führt auf insgesamt

$$N = \sum_{l=0}^{L-1} N_l = 2^{L+1} - 1$$ Teilbandsignale. Durch die Teilbandsignale $v_n^{(l)}(k)$ werden die zu untersuchenden Frequenzbereiche festgelegt. Es ergeben sich N Frequenzbereiche mit unterschiedlicher Kombination aus Mittenfrequenz und Bandbreite, die näher analysiert werden.

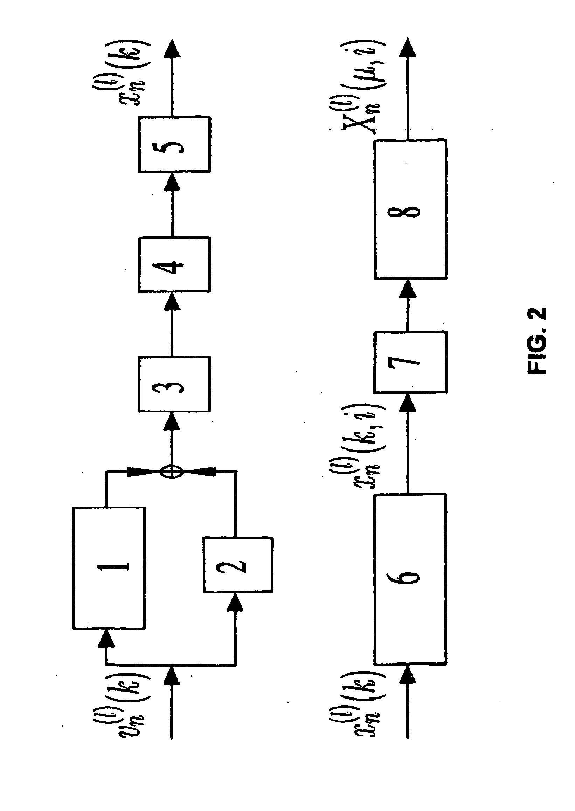

Die Berechnung des DEMON-Gramms erfolgt stets für jedes Teilbandsignal $v_n^{(l)}(k)$. Figur 2 zeigt in einem Signalflussplan eine Möglichkeit zur Berechung eines DEMON-Gramms: Für jedes Teilbandsignal $v_n^{(l)}(k)$ wird die Signaleinhüllende mit Hilfe eines Hilbert-Transformators 1 (j · Hilbert) und eines Verzögerungsgliedes 2 und der anschließenden Betragsbildung 3 bestimmt. Das Verzögerungsglied 2 dient mit seiner Verzögerungszeit $\tau$ dem Laufzeitausgleich. Eine andere Möglichkeit zur Berechnung der Signaleinhüllenden ist ein quadratischer Gleichrichter, z. B. nach DE 198 09 784 C1. Das Tiefpassfilter 4 und die Taktreduzierung 5 (z. B. um den Taktreduzierungsfaktor $M_1$) reduzieren den Rechenaufwand bei der folgenden Spektralanalyse. In der Signaleinhüllenden steckt die Information über die durch die Kavitation bedingte Amplitudenmodulation. Bei der Spektralanalyse reicht es aus, den unteren Frequenzbereich des Wasserschallsignals im Mittel bis 75 Hz oder max. bis 150 Hz auszuwerten. In diesem Frequenzbereich liegen nahezu alle Wellendrehzahlen von z.B. Schiffen und Ubooten und auch die wichtigsten dazugehörenden Oberschwingungen (2. und 3. Harmonische) zu finden. Entsprechend wird durch die Taktreduzierung 5 der Taktreduzierungsfaktor $M_l$ in der l-ten Stufe der Filterbank gewählt. Für die Spektraltransformation wird das Signal $x_n^{(l)}(k)$ in die sich überlappenden und mit einer Fensterfunktion gewichteten Signalblöcke $x_n^{(l)}(k,i)$ zerlegt, wobei i den Blockindex bezeichnet. Die Transformation in den Spektralbereich erfolgt blockweise mit Hilfe einer FFT 7 (Fast Fourier Transformation). Mit der abschließenden Normierung 8 des Signals auf den spektralen Hintergrund werden spektrale Trends aus den Daten entfernt. Die zeitliche Abfolge eines Spektrums $x_n^{(l)}(\mu,i)$ entspricht einem DEMON-Gramm; hier berechnet für ein Teilbandsignal. Der Index 1 bezeichnet die Stufe der Filterbank, der Index n bezeichnet die zugehörige Teilbandnummer. Es liegen nun N zeitliche Abfolgen $X_n^{(l)}(\mu,i)$ vor, die N DEMON-Gramme beschreiben. Die zeitliche Abfolge der Signalblöcke wird durch den Blockindex i beschrieben, $\mu$ bezeichnet den Frequenzindex.

Zu jedem Zeitpunkt i werden die Spektren $X_n^{(l)}$ $(\mu,i)$ gewichtet zu einem Spektrum $X(\mu,i)$ überlagert. Dazu wird eine Gewichtungsfunktion der Form $g(l,n,\mu,i)$ verwendet. Die zeitliche Abfolge von $X(\mu,i)$ ergibt das DEMON-Gramm, das üblicherweise als Wasserfalldisplay angezeigt wird.

Die Gewichtungsfunktion $g(l,n,\mu,i)$ ist eine Funktion, die vom Teilband 1, n, vom Frequenzindex $\mu$ und vom Zeitindex i abhängt. Sie wird nach einem vorgegebenen Kriterium bestimmt, sodass Frequenzbereiche in den Teilbandspektren $X_n^{(l)}(\mu,i)$, die informationstragend sind, stärker gewichtet werden als solche, die keine Information tragen. Teilbänder aus informationstragenden Frequenzbereichen enthalten im Spektrum Teile eines Linienmusters. Zur Bestimmung der Gewichtungsfunktion werden die lokalen Verteilungen der Spektralwerte der DEMON-Gramme $(X_n^{(l)}(\mu,i)\ \forall i)$ ausgewertet.

Bildet man die Verteilung der Spektralwerte mehrerer DEMON-Gramme ab, ergeben Beispiele für die Verteilung der Spektralwerte zufällig ausgewählte DEMON-Gramme zu Teilbandsignalen $x_n^{(l)}(k)$, die ein weißes Testssignal als Eingangssignal für die Filterbank darstellen, keine signifikanten Unterschiede im Kurvenverlauf. Die Kurven sind näherungsweise deckungsgleich. Nur in der Ausschnittsvergrößerung werden geringe Unterschiede zwischen den einzelnen Verteilungen sichtbar.

Die DEMON-Berechnung führt für die Spektralwerte grundsätzlich auf eine Rayleighähnliche Verteilung mit einer zusätzlichen Spitze um den Wert eins herum. Lediglich bei der Häufigkeit großer Amplitudenwerte unterscheiden sich die Verteilungen bei Ausschnittsvergrößerung. Große Amplituden bei den Spektralwerten treten vermehrt dann auf, wenn das betrachtete DEMON-Gramm ein Liniemuster oder Teile davon enthält. Linienmuster treten in einem DEMON-Gramm eines Teilbandsignals auf, wenn das Teilbandsignal modulierte Rauschanteile enthält, also durch Kavitation erzeugte Spektralinformationen enthalten sind. Für zufällig ausgewählte DEMON-Gramme zu Teilbandsignalen $x_n^{(l)}(k)$ entstehen näherungsweise deckungsgleiche Kurven bei einem weißen Testsignal als Eingangssignal für die Filterbank. Diese deckungsgleichen Kurven zeigen demzufolge die Verteilung der normierten Spektralwerte bei der DEMON-Analyse, wenn im jeweils untersuchten Teilbandsignal keine modulierten Rauschanteile enthalten sind. Diese Verteilung wird als bekannt und/oder als Bezugswert für eine Datenauswertung abgespeichert und stellt gewissermaßen eine "Erwartete Verteilung" dar, die im Folgenden nur als erwartete Verteilung bezeichnet wird.

Kurvenverläufe für ein Teilbandsignal eines echten Wasserschallsignals, in dem keine erkennbaren modulierten Rauschanteile enthalten sind, zeigen nur geringe Abweichungen von der erwarteten Verteilung des Bezugswertes. Werden Teilbandsignal eines echten Wasserschallsignals, in dem modulierten Rauschanteile enthalten sind, ausgewertet, ergeben sich deutliche Abweichungen des DEMON-Gramms vom Verteilungsverlauf des Bezugswertes. Diese Abweichungen bilden eine Auswertegrundlage zwischen den zu bewertenden DEMON-Grammen. Die vom erwarteten Kurvenverlauf abweichenden DEMON-Gramme enthalten also Informationen zu Kavitationserscheinungen in Form von Linien und werden als informationstragende DEMON-Gramme bezeichnet. Die erläuterten Eigenschaften zu der Verteilung von Spektralwerten von DEMON-Grammen werden als globale Eigenschaft bei der Auswertung aller Spektralwerte eines DEMON-Gramms gefunden.

Bei der adaptiven Bestimmung informationstragender DEMON-Gramme wird die Tatsache ausgenutzt, dass die globale Eigenschaft der Verteilung der Spektralwerte auch für lokal begrenzte Zeit-Frequenz-Bereiche in DEMON-Grammen Gültigkeit hat.

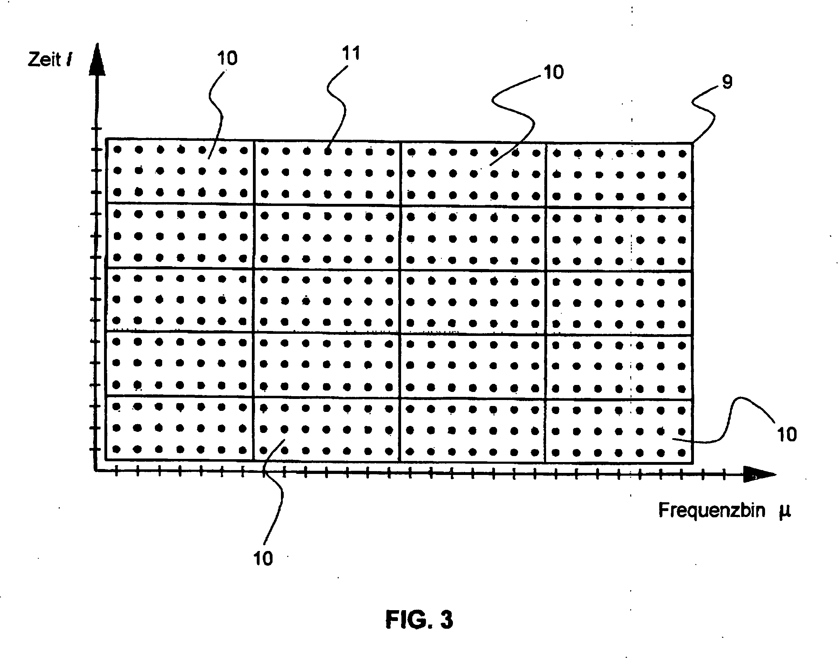

Erfindungsgemäß wird zunächst schematisch eine einfache Aufteilung der Zeit-Frequenz-Ebene 9 in lokale Bereiche 10 vorgenommen. Jede einzelne Box steht für einen lokalen Bereich 10 in der Zeit-Frequenz-Ebene 9 eines DEMON-Gramms. Im Beispiel nach Figur 3 besteht jeder lokale Bereich 10 aus sieben Frequenzpunkten $\mu$ zu drei verschiedenen Zeitpunkten i, also aus 21 Spektralwerten. Für jeden lokalen Bereich 10 werden die N DEMON-Spektren $X_n^{(l)}$ $(\mu,i)$, also $1 = 0...L-1$, $n=0...N_l-1$, getrennt ausgewertet. Die Auswertung der Verteilung der Spektralwerte führt auf die Gewichtungsfunktion $g(l,n,\mu,i)$. Informationstragende lokale Bereiche 10 eines DEMON-Spektrums werden stärker gewichtet als lokale Bereiche 10, die keine Information (hier keine großen Amplituden) enthalten. Als Maß für den Informationsgehalt eines lokalen Bereichs 10 wird dabei folgendes Kriterium verwendet:

Es wird der Abstande zwischen der bekannten erwarteten Verteilung der Spektralwerte und der tatsächlichen Verteilung der Spektralwerte für den betrachteten lokalen Bereich 10 bestimmt. Die Abstandsberechung wird auf den Bereich großer Amplitudenwerte beschränkt. Ein großer Abstand zeigt ein informationstragendes Teilband an, ein kleiner Abstand zeigt ein Teilband ohne Information an. Als Abstandsmaß wird die Kullback-Leibler-Divergenz zwischen "Erwarteter Verteilung" und tatsächlicher Verteilung verwendet (Demleitner, M.: Einführung in die statistische Signalverarbeitung, Vorlesungsskript, Universität Heidelberg, (2004/2005).

Die Überlagerung bzw. die Kombination zu einem DEMON erfolgt dann durch eine mit geeignet normierten Abständen gewichtete Überlagerung der Spektren $X_n^{(l)}(\mu,i)$ für jeden lokalen Bereich 10. Die normierten Abstände ergeben die Gewichtungsfunktion $g(l,n,\mu,i)$. Die in Figur 3 gezeigte Aufteilung der Zeit-Frequenz-Ebene 9 wird bei der eigentlichen Implementierung des Algorithmus mit sich zu 50% (½) überlappenden Frequenzbereichen durchgeführt, um Blockeffekte zu vermeiden, was bei der Überlagerung der Spektren $X_n^{(l)}(\mu,i)$ berücksichtigt werden muss. Auf der Zeitachse wird ein gleitendes Fenster verwendet. Die Überlagerung bzw. Kombination zu einem DEMON-Gramm lässt sich dann durch die Formel

$$X(\mu,i) = \sum_l \sum_n f(l,n,\mu) \cdot g(l,n,\mu,i) \cdot X_n^{(l)}(\mu,i)$$

beschreiben.

Die Gewichtungsfaktoren g(l, n, $\mu$, i) beschreiben die geeignet normierten Abstände der lokalen Verteilungen der Spektralwerte in den DEMON-Grammen von der erwarteten Verteilung. Die Gewichtungsfaktoren können somit als zeit- und frequenzbereichsselektives Maß für den momentanen Informationsgehalt jedes einzelnen der N DEMON-Gramme betrachtet werden. Für die Überlagerung werden die Gewichtungsfaktoren so normiert, dass $\sum_l \sum_n g(l,n,\mu,i) \equiv 1$ für festes i und $\mu$

gilt. Der Faktor f(l,n,$\mu$) beschreibt die erforderliche zusätzliche Bewertung der Gewichtungsfaktoren bei Überlappung der lokalen Frequenzbereiche.

Eine alternative Realisierung besteht darin, das Grundelement (2-kanalige QMF) der verwendeten Baumfilterbank durch eine M-Kanal Filterbank zu ersetzt. M gibt die Anzahl der Teilbänder an. Für M=3 wird die Baumfilterbank aus einem Tief-, Band- und Hochpass aufgebaut. Die benachbarten Filter werden so gewählt, dass sie sich zu 50% (½) überlappen. In Stufe 1 ergeben sich $3^l$ Teilbänder statt $2^l$ bei der 2-Kanal-Filterbank. Der Rechenaufwand steigt dadurch an. Die Frequenzachse wird bei der Suche nach geeigneten Frequenzbereichen dadurch besser abgetastet. Bei der Überlagerung zur Berechnung des DEMON Spektrums X($\mu$,i) werden für jeden lokalen Bereich 10 nur eine begrenzte Anzahl der N Teilbandbereiche berücksichtigt. Dies erreicht man durch Verwendung eines adaptiven Schwellwerts für das Abstandsmaß. Für Bereiche, bei denen der Abstand kleiner als der Schwellwert ist, wird der Gewichtungsfaktor auf null gesetzt.

Das entstehende DEMON-Gramm X($\mu$,i) wird für Auswertungen sichtbar dargestellt - bevorzugt durch optische Bildwiedergabesysteme - z. B. in der Form eines Wasserfalldisplay, wofür bekannte Ansteueralgorithmen für Signaldarstellungssysteme benutzt werden, die von den entstehenden DEMON-Grammen X($\mu$,i) gesteuert werden.

Durch die Einführung einer normierter Gewichtungsfunktion g(l,n,$\mu$,i) und durch die Überlagerung bzw. Kombination zu einem DEMON indem durch eine mit den geeignet normierten Abständen gewichtete Überlagerung der Spektren $X_n^{(l)}(\mu,i)$ für jeden lokalen Bereich 10 vorgenommen wird, ist der zu analysierende Frequenzbereich optimierbar, dem Hüllkurvendemodulator werden störende Frequenzen nicht angeboten, sodass eine automatisierbare Entscheidungsauswahl signifikanter Geräuschquellen, auch wenn sie gehäuft und in geringer Stärke auftreten, möglich ist, wodurch für Auswerteverfahren von DEMON-Grammen X($\mu$,i) ein Qualitätssprung zu verzeichnen ist.

Bezugszeichenliste:

1: Hilberttransformator
2: Verzögerungsglied
3: Betragsbildung |·|
4: Tiefpassfilter
5: Taktreduzierung
6: Blockbildung
7: FFT
8: Normierung
9: Frequenz-Zeit-Ebene
10: lokaler Bereich
11: einzelner Spektralwert

**Patentansprüche**

**1.** Verfahren zur verbesserten DEMON-Berechnung mittels Teilband-Signalen zur Auswertung von Unterwasserschallsignalen durch Passiv-Sonaranlagen und Erstellung von Unterwasserlagebildem unter Anwendung der DEMON-Analyse (DEMON = Demodulation of Envelope Modulation on Noise), indem die durch Schiffsschrauben und -wellen entstehenden, einem amplitudenmodulierten Breitbandgeräusch entsprechenden Unterwasserschallsignale mittels einer aus Tief- und Hochpässen bestehenden Baumfilterbank gefiltert werden und durch Demodulation die Signaleinhüllende als Informationsträger gewonnen wird, aus der nach einer Spektralanalyse das DEMON-Gramm berechnet wird,
**dadurch gekennzeichnet, dass**
die Zeit-Frequenz-Ebene (9) des DEMON-Gramms in lokale Bereiche (10) aufgeteilt wird,
jeder einzelne Spektralwert (11) aus Frequenzpunkten $\mu$ und Zeitpunkten i besteht, für

den N DEMON-Spektren $X_n^{(l)}(\mu,i)$ getrennt ausgewertet werden, wobei $N = \sum_{l=0}^{L-1} N_l$ und L die Anzahl der Stufen der Baumfilterbank mit dem Laufindex 1= 0, 1, ..., L-1 und $N_1$ die Anzahl der Teilbänder in Stufe 1 mit dem Laufindex n = 0, ... , $N_1$ - 1 angibt,
indem informationstragende lokale Bereiche (10) eines DEMON-Spektrums $X_n^{(l)}(\mu,i)$ stärker als nicht informationstragende lokale Bereiche (10) bewertet werden, nachdem diese durch Betrachtung der Abstände zwischen der Verteilung der Spektralwerte identifiziert wurden, und wobei eine Auswertung der Spektralwerteverteilung zu einer Gewichtungsfunktion g(l,n,µ,i) führt, bei der der Abstand zwischen einer vorab bestimmten und bei Abwesenheit von modulierten Rauschanteilen erwarteten Spektralwerteverteilung und der tatsächlichen für jeden lokalen Bereich (10) ermittelt wird, wobei ein großer Abstand ein informationstragendes Teilband anzeigt und ein kleiner Abstand ein Teilband ohne Information anzeigt,
durch die gewichtete Überlagerung der Spektren

$X_n^{(l)}(\mu,i)$ für jeden lokalen Bereich (10) mit geeigneten, normierten Abständen ein DEMON-Gramm nach der Gleichung

$$X(\mu,i) = \sum_l \sum_n f(l,n,\mu) \cdot g(l,n,\mu,i) \cdot X_n^{(l)}(\mu,i)$$

entsteht,
das optisch abgebildet wird, wobei f (l,n,µ) einen Faktor für die erforderliche zusätzliche Bewertung der Gewichtsfaktoren bei Überlappung der Frequenzbereiche beschreibt.

2. Verfahren nach Anspruch 1, **gekennzeichnet dadurch, dass** sich die Abstandsberechnung auf den Bereich großer Amplitudenspektralwerte von Teilbandsignalen beschränkt.

3. Verfahren nach Anspruch 1 und 2, **gekennzeichnet dadurch, dass** die Gewichtungsfaktoren für die Überlagerung so normiert werden, dass sie der Gleichung $\sum_l \sum_n g(l,n,\mu,i) \equiv 1$ für festes i und µ entsprechen.

4. Verfahren nach Anspruch 1 bis 3, **gekennzeichnet dadurch, dass** die Aufteilung der Zeit-Frequenzebene (9) bei der Algorithmusimplementierung mit sich zu ½ überlappenden Frequenzbereichen durchgeführt wird.

5. Verfahren nach Anspruch 1 bis 4, **gekennzeichnet dadurch, dass** zur Berechnung des DEMON-Spektrums $X_n^{(l)}(\mu,i)$ für jeden lokalen Bereich (10) nur eine begrenzte Anzahl der N Teilbandbereiche berücksichtigt werden.

**Claims**

1. Method for improved DEMON calculation by means of subband signals for evaluating underwater acoustic signals by passive sonar installations and generating images of the subsurface situation by applying the DEMON analysis (DEMON = Demodulation of Envelope Modulation on Noise) in that the underwater signals, generated by the propellers of ships and waves from ships and corresponding to an amplitude modulated broadband noise, are filtered by a tree filter bank consisting of high passes and low passes and by demodulating the signal envelope is obtained as an information carrier, from which the DEMON gram is calculated after a spectral analysis,
**characterized in that**
the time-frequency level (9) of the DEMON gram is subdivided into local areas (10),
each individual spectral value (11) consists of frequency points µ and instants i , for which DEMON spectra $X_n^{(l)}(\mu,i)$ are evaluated separately,

$$N = \sum_{l=0}^{L-1} N_l$$ and L being the number of steps of the tree filter bank with the running index 1 = 0, 1, ..., L-1 and $N_1$ specifying the number of subbands in step 1 with the running index n = 0, ... , $N_1$ -1,
**in that** information-carrying local areas (10) of a DEMON spectrum $X_n^{(l)}(\mu,i)$ being evaluated more strongly than non-information-carrying local areas (10) after they have been identified by observation of the distances between the distribution of the spectral values, and wherein evaluation of the distribution of the spectral values leads to a weighting function g(l,n,µ,i) where the distance is determined between a distribution of the spectral values that is determined in advance and is expected in the absence of modulated noise components, and the actual one for each local area (10), a large distance indicating an information-carrying subband and a small distance indicating a subband without information,
by weighted superposition of the spectra $X_n^{(l)}(\mu,i)$ for each local area (10) with suitable standardized distances a DEMON gram according to the following function

$$X(\mu,i) = \sum_l \sum_n f(l,n,\mu) \cdot g(l,n,\mu,i) \cdot X_n^{(l)}(\mu,i)$$

is produced,
that is mapped optically, f (l,n,µ,) describing a factor for the required additional evaluation of the weight factors when the frequency ranges overlap.

2. Method according to Claim 1, **characterized in that** calculating the distances is limited to the area of large amplitude spectral values of subband signals.

3. Method according to Claim 1 and 2, **characterized in that** the weighting factors for the superposition are standardized in such a way that they correspond to the equation $\sum_{l}\sum_{n} g(l,n,\mu,i) \equiv 1$ for fixed values of i and $\mu$.

4. Method according to Claim 1 to 3, **characterized in that** the subdivision of the time-frequency level (9) is carried out during algorithm implementation with frequency ranges overlapping by ½.

5. Method according to Claim 1 to 4, **characterized in that** for calculating the DEMON spectrum $X_n^{(l)}(\mu,i)$ for each local area (10) only a limited number of the N subband areas are taken into account.

**Revendications**

1. Procédé de calcul DEMON amélioré à l'aide de signaux de sous-bande pour l'évaluation de signaux acoustiques sous-marins par l'intermédiaire de dispositifs sonar passifs et pour la réalisation d'images de situation sous-marines en utilisant l'analyse DEMON (DEMON = Demodulation of Envelope Modulation on Noise), en filtrant les signaux acoustiques sous-marins produits par les hélices et arbres de navires et correspondant à un bruit à large bande modulé en amplitude, au moyen d'un banc de filtres arborescent se composant de filtres passe-bas et passe-haut, et en obtenant, par démodulation, l'enveloppe de signal en tant que porteur d'informations à partir de laquelle on calcule, après une analyse spectrale, le DEMON-gramme,
**caractérisé par le fait que**
le plan temps-fréquence (9) du DEMON-gramme est divisé en zones locales (10),
chaque valeur spectrale individuelle (11) se compose de points de fréquence $\mu$ et de moments i, pour laquelle des N spectres DEMON $X_n^{(l)}(\mu,i)$ sont exploités séparément, $N = \sum_{l=0}^{L-1} N_l$ et L indiquant le nombre des étages du banc de filtres arborescent avec l'indice l = 0, 1, ..., L-1 et $N_l$ indiquant le nombre des sous-bandes à l'étage 1 avec l'indice n = 0, ..., $N_l$-1,
en évaluant les zones locales (10) porteuses d'informations d'un spectre DEMON $X_n^{(l)}(\mu,i)$ d'une manière plus importante que les zones locales (10) non-porteuses d'informations après que celles-ci ont été identifiées en considérant les intervalles entre la répartition des valeurs spectrales, et une exploitation de la réparation des valeurs spectrales conduisant à une fonction de pondération g(l,n,$\mu$,i) dans laquelle

est déterminé, pour chaque zone locale (10), l'intervalle entre une répartition des valeurs spectrales déterminée auparavant et attendue en absence de composantes de bruit modulées et la répartition réelle, un grand intervalle indiquant une sous-bande porteuse d'informations et un petit intervalle indiquant une sous-bande exempte d'informations,
par la superposition pondérée des spectres $X_n^{(l)}(\mu,i)$ pour chacune des zones locales (10) avec des intervalles appropriés normalisés est produit un DEMON-gramme selon l'équation

$$X(\mu,i) = \sum_{l}\sum_{n} f(l,n,\mu) \cdot g(l,n,\mu,i) \cdot X_n^{(l)}(\mu,i)$$

qui est représenté optiquement, f (l,n,$\mu$) décrivant un facteur pour l'évaluation supplémentaire nécessaire des facteurs de pondération dans le cas d'un chevauchement des gammes de fréquence.

2. Procédé selon la revendication 1, **caractérisé par le fait que** le calcul de l'intervalle se limite au domaine de grandes valeurs spectrales d'amplitude de signaux de sous-bande.

3. Procédé selon la revendication 1 et 2, **caractérisé par le fait que**, pour la superposition, les facteurs de pondération sont normalisés de manière à ce qu'ils correspondent à l'équation

$$\sum_{l}\sum_{n} g(l,n,\mu,i) \equiv 1$$ pour des i et $\mu$ fixes.

4. Procédé selon la revendication 1 à 3, **caractérisé par le fait que** la division du plan temps-fréquence (9) est réalisée, lors de implémentation de l'algorithme, avec des gammes de fréquence se recouvrant à ½.

5. Procédé selon la revendication 1 à 4, **caractérisé par le fait que**, pour le calcul du spectre DEMON $X_n^{(l)}(\mu,i)$, on ne prend en considération qu'un nombre restreint des N zones de sous-bande pour chaque zone locale (10).

FIG. 1

EP 2 009 459 B1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4141562 A1
- DD 301729 A9
- DD 300369 A5
- DE 4220429 A1
- DE 19809784 C1


**In der Beschreibung aufgeführte Nicht-Patentliteratur**

- Detection of short transients in colored noise by multirate multiresolution (MRMR) analysis. CON ' FERENCE RECORS of the 37th Asilomar Conference on Signals, Systems % Computers. IEEE, 2003, vol. 1, 1183-1187
- **Urban, H. G.** *Handbuch der Wasserschalltechnik, STN Atlas Elektronik GmbH,* 2002, 255-256
- **Waite, A. D.** *Sonar for Practising Engineers,* 2002, 129-131
- **Seixas J M et al.** Wavelet transform as a preprocessing method for neural classification of passive sonar signals. *ELECTRONICSm CIRCUITS ans SYSTEMS,* 2001, vol. 1, 83-86
- **DEMLEITNER, M.** Einführung in die statistische Signalverarbeitung. Universität Heidelberg, 2004